# EUROPEAN PATENT SPECIFICATION

(11) **EP 1 990 747 B1**
(45) Date of publication and mention of the grant of the patent: **13.02.2013**
(21) Application number: 08251113.0
(22) Date of filing: 27.03.2008
(51) Int. Cl.: G06F 17/30

(54) **Communication system and reply method thereof**
Kommunikationssystem und Antwortverfahren dafür
Système de communication et son procédé de réponse

(30) Priority: 30.04.2007 KR 20070042155
(43) Date of publication of application: 12.11.2008
(73) Proprietor: Samsung Electronics Co., Ltd., Suwon-si, Gyeonggi-do, 443-742 (KR)
(72) Inventor: Kim, Jung Hun, Yeongtong-gu Suwon-si, Gyeonggi-do (KR)
(74) Representative: Harrison Goddard Foote

(56) References cited:
- US-A- 5 819 032
- US-A1- 2006 263 133
- US-A1- 2007 031 806
- US-A1- 2007 038 646

## Description

### BACKGROUND OF THE INVENTION

### 1. Field of the Invention

The present invention relates generally to a communication system and a reply method thereof, and in particular, to a communication system and a reply method thereof, that enable various types of replies to be attached to a user's article posted on a web page.

### 2. Description of the Related Art

A user may connect to a web server through a communication terminal, for example, a mobile phone or a computer. The user may obtain information through a web page of the web server and attach a reply in the form of a text through key input. The reply may be attached to a reply area provided below each article on the web page. The web page is a page on the web for displaying the user's article, and may includes a home page or a blog of the user.

Conventionally, the reply is attached only to the reply area separated from each article of the web page and is formed only of text, and thus it is impossible to attach various other types of replies to articles. Further, to check the reply attached to the web page, the user has to connect to the web page of the web server through the communication terminal.

US 2006/263133 A1 discloses a method and apparatus for collaborative design using a digital image. For example, a networked system includes a web server, a database accessible by the web server, and a client computer connected with the web server via the Internet for modifying a design set forth in a digital image and uploading a first modified version of the digital image. The web server hosts a web-based collaborative design application for modifying a room design depicted in a digital image, and published on a web site hosted by the web server. The database stores information published on the web site. The client computer can be used for designing, e.g., a room based on a digital image of a room scene, and uploading the digital images, under control of a first user, to the web server. The collaborative design application is accessible by the first user to post the digital images for storage in the database, and is accessible via the Internet by a second user for posting of a redesign and comment.

US 2007/031806 A1 discloses a learner-centered system for collaborative learning. The computer-based system is accessible by a community of users over an electronic communications network. A data storage device for storing data comprising items of teaching content and learner-initiated content is thus remotely accessible by the users. A set of collaborative dialogue tools is provided that is configured for learners to freely initiate and generate their own items of learner-initiated content in relation to items of teaching content for storage. The learners are allowed to generate one or more links between an item of learner-initiated content so stored and at least one item of teaching content through a linking mechanism of the system.

US-A-5 819 032 discloses an electronic magazine which is distributed electronically from a publisher to multiple subscribers.

### SUMMARY OF THE INVENTION

The present invention provides a communication system and a reply method thereof that enable various types of replies to be attached to a web page. The present invention further provides a communication system and a reply method thereof that enable a user to easily check articles of the web page including the replies.

According to an embodiment of the present invention, a reply method of a communication system includes posting a user's article registered on a user page of a user communication terminal on a web page of a web server; connecting to the web page through a reply communication terminal and attaching a reply to the posted user's article; and displaying the user's article having the reply on the user page when a request for displaying the user's article on the user page is received, wherein displaying the user's article comprises:
requesting information about a reply to the web page when the request for displaying the user's article on the user page is received;
receiving the information about the reply from the web page; and
displaying the user's article having the reply on the user page according to the received information of the reply.

According to another embodiment of the present invention, a communication system includes, a web server having a web page for posting an article; a user communication terminal having a user's article of a user page for connecting to the web page of the web server to post the user's article on the web page; and a reply communication terminal for connecting to the web server and attaching a reply to the posted user's article If the user communication terminal receives a request for displaying the user's article on the user page, the user communication terminal receives information about the reply from the web server and displays the user's article having the reply on the user' page.

### BRIEF DESCRIPTION OF THE DRAWINGS

The above and other objects, features and advantages of the present invention will become more apparent from the following detailed description when taken in conjunction with the accompanying drawings, in which:
FIG. 1 is a block diagram of a communication system according to an embodiment of the present invention.
FIGS. 2A and 2B are flow charts of a reply method of the communication system according to an embodiment of the present invention.
FIG. 3A through 3E are different views of display screens illustrating the reply method of FIGS 2A and 2B.

### DETAILED DESCRIPTION OF THE PREFERRED EMBODIMENTS

Preferred embodiments of the present invention are described with reference to the accompanying drawings in detail. The same reference numbers are used throughout the drawings to refer to the same or like parts. Detailed description of well-known functions and structures incorporated herein may be omitted to avoid obscuring the subject matter of the present invention.

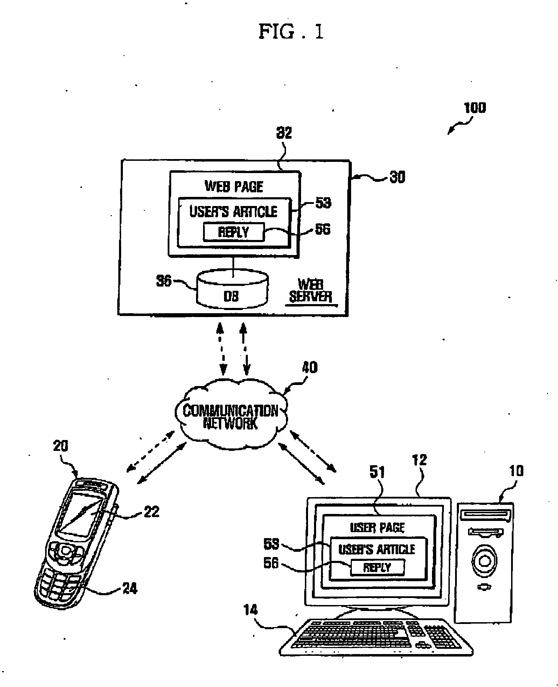

FIG. 1 is a block diagram of a communication system 100 according to an embodiment of the present invention. Referring to FIG. 1, the communication system 100 according to an embodiment of the present invention includes a user communication terminal 10, a web server 30, and a reply communication terminal 20. The user communication terminal 10, the web server 30, and the reply communication terminal 20 are connected through a wired or wireless communication network 40.

The user communication terminal 10 is capable of connecting to the web server 30 through the communication network 40, and controls execution of an application program for displaying a user page 51. The user may prepare a user's article 53 on the user page 51, or may prepare the user's article 53 outside using the user communication terminal 10, and may subsequently register the user's article 53 on the user page 51. The user's article 53 may include a text or a video prepared by the user or background music added thereto.

The web server 30 operates a web page 32 for posting the user's article 53. The user posts the user's article 53 through the user communication terminal 10 on the web page 32. For example, a pen tool may be used for preparing a text or a simple image, and an attach tool may be used for attaching a reply prepared outside of the user communication terminal 10 to the user's article 53. The web server 30 stores the user's article 53 and a reply 56 attached to the user's article 53 into a database 36.

The reply communication terminal 20 is a communication terminal for a replying user and is capable of connecting to the web server 30 through the communication network 40. The replying user may connect to the web server 30 to attach the reply 56 to the user's article 53 using the reply communication terminal 20.

The replying user may directly attach the reply 56 to the content of the user's article 53 posted on the web page 32 through the reply communication terminal 20. The reply 56 includes at least one of a text, a still image, a moving image and audio data. The reply 56 may have a form of text or a stick-on attachment. The reply 56 may be displayed on or adjacent to the display area of the user's article 53.

The replying user may prepare the reply 56 using a tool provided by the web page 32 or through the reply communication terminal 20. The replying user may select a location of the reply 56 on the posted user's article 53 by operating a keypad 24 of the reply communication terminal 20.

When the user communication terminal 10 receives a request for executing the user page 51, the user communication terminal 10 displays the user's article 53 posted on the web server 30 on the user page 51. When the user communication terminal 10 receives the request for executing the user page 51, the user communication terminal 10 connects to the web server 30 to receive information of the reply 56 attached to the user's article 53 posted on the web page 32. The user communication terminal 10 displays the user's article 53 having the reply 56 on the user page 51 according to the received information of the reply 56. The user's article 53 having the reply 56 displayed on the user communication terminal 10 is the same as the user's article 53 having the reply 56 posted on the web page 32.

Therefore, according to an embodiment of the present invention, various types of the replies 56 may be attached to the user's article 53 posted on the web page 32. Although the user does not connect to the web server 30, the user can directly check the reply 56 attached to the user's article 53 through the user page 51 of the user communication terminal 10.

Although this embodiment shows a personal computer as the user communication terminal 10 and a mobile communication terminal as the reply communication terminal 20, the present invention is not limited in this regard. For example, each of the user communication terminal 10 and the reply communication terminal 20 may be any one of a mobile communication terminal and a computer. The mobile communication terminal enables wired or wireless communication, and may be a digital broadcast terminal, Personal Digital Assistant (PDA), smart phone, International Mobile Telecommunication 2000 (IMT-2000) terminal, Wideband Code Division Multiple Access (WCDMA) terminal and Universal Mobile telecommunication Service (UMTS) terminal. The computer may be a personal computer, a desktop computer and a notebook.

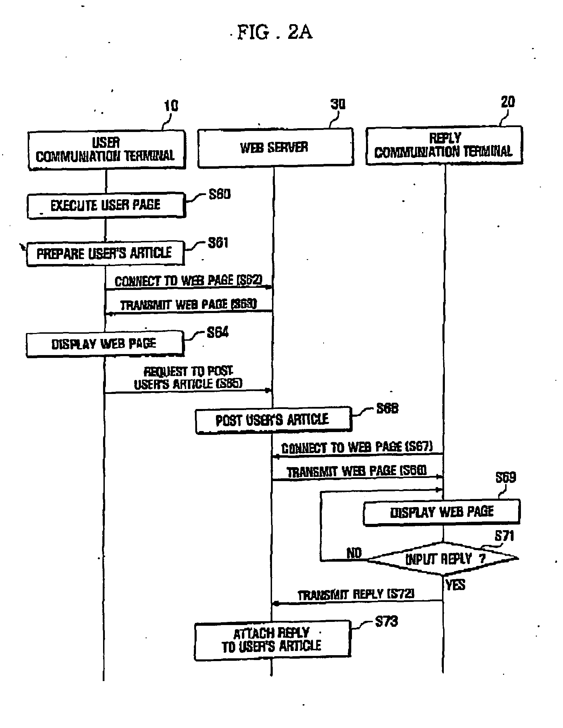

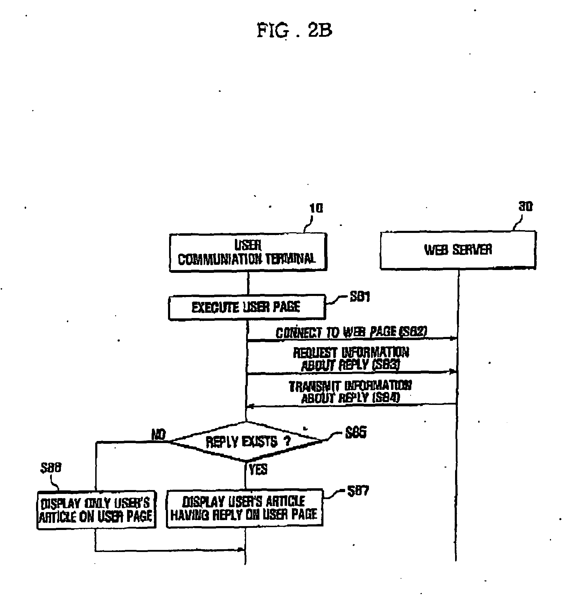

A reply method of the communication system 100 according to an embodiment of the present invention is described with reference to FIGS. 1, 2A and 2B. FIGS. 2A and 2B are flow charts of the reply method of the communication system 100 according to an embodiment of the present invention. Specifically, FIG. 2A is a flow chart of a posting process and a replying process of the reply method according to an embodiment of the present invention. FIG. 2B is a flow chart of a displaying process of the reply method according to an embodiment of the present invention. A selection signal of the user is input through a keyboard 14 of the user communication terminal 10. A selection signal of the replying user is input through the keypad 24 of the reply communication terminal 20.

The posting process of the replying method is performed according to steps S60 S66. The user communication terminal 10 executes the user page 51 according to the selection signal of the user at step S60. The user prepares the user's article 53 on the user page 51 at step S61. Alternatively, the user may prepare the user's article 53 by registering an article prepared using another application program on the user page 51.

The user communication terminal 10 connects to the web page 32 of the web server 30 through the communication network 40 according to the selection signal of the user at step S62. The web server 30 transmits the web page 32 to the user communication terminal 10 at step S63. The user communication terminal 10 displays the received web page 32 in conformity with a type of a display unit 12 at step S64.

The user communication terminal 10 requests to post the prepared user's article 53 on the web page 32 according to the selection signal of the user at step S65, and the web server 30 posts the requested user's article 53 on the web page 32 at step S66.

Subsequently, the replying process of the reply method is performed according to steps S67 through S73. The replying user connects to the web page 32 through the reply communication terminal 20 at step S67. The web server 30 transmits the web page 32 to the reply communication terminal 20 at step S68. The reply communication terminal 20 displays the received web page 32 in conformity with a type of the display unit 22 at step S69.

The reply communication terminal 20 determines whether the reply 56 is input at step S71. If the reply 56 is not input, the reply communication terminal 20 maintains a display state of the web page 32 at step S69. If the reply 56 is input, the reply communication terminal 20 transmits the input reply 56 to the web server 30 at step S72.

The web server 30 attaches the reply 56 to the posted user's article 53 at step S73. The web server 30 stores information of the reply 56 attached to the posted user's article 53 into the database 36. The information of the reply 56 may be the reply 56 itself, or may be location information of the reply 56 attached to the user's article 53.

Subsequent to the above-mentioned posting process and replying process of the reply method, the displaying process of the reply method is performed according steps S81 through S87.

The user communication terminal 10 executes the user page 51 according to the selection signal of the user at step S81. The user communication terminal 10 connects to the web page 32 of the web server 30 over the communication network 40 at step S82. The user communication terminal 10 requests information about a reply 56 to the web server 30 connected thereto at step S83.

The user communication terminal 10 receives information about a reply 56 from the web server 30 at step S84. When the posted user's article 53 does not have a reply 56, the information about a reply 56 indicates that the posted user's article 53 does not have any reply. When the posted user's article 53 has a reply 56, the information about a reply 56 includes information about the reply 56 attached to the posted user's article 53.

From the received information about a reply, the user communication terminal 10 determines whether the reply 56 exists at step S85. If the reply 56 does not exist, the user communication terminal 10 displays only the user's article 53 on the user page 51 at step S86.

If the reply 56 exists at step S85, the user communication terminal 10 displays the user's article 53 having the reply 56 on the user page 51 according to the information of the reply 56 at step S87. The user's article 53 having the reply 56 displayed on the user communication terminal 10 is the same as the user's article 53 having the reply 56 posted on the web page 32.

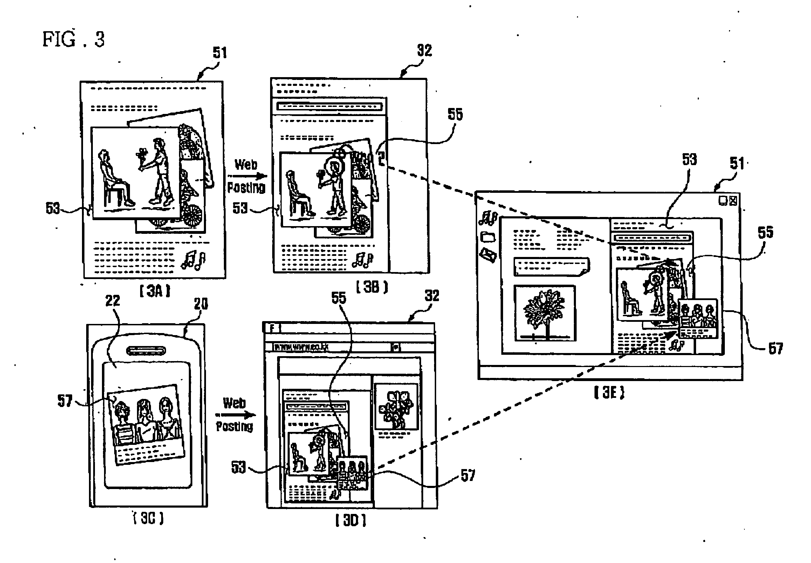

Different views of display screens illustrating the reply method of FIGS. 2A and 2B are shown in FIGS. 3A through 3E. As shown in FIG. 3A, the user prepares the user's article 53 on the user page 51. As shown in FIG. 3B, the user posts the prepared user's article 53 on the web page 32.

As shown in FIGS. 3B and 3D, the replying user may attach replies 55 and 57 to the user's article 53 posted on the web page 32. As shown in FIG. 3B, the replying user may directly attach the reply 55 in the form of a text to the posted user's article 53 using a pen tool provided by the web page 32. For example, the user's article 53 may be a photograph, and the replying user may prepare the reply 55, in which the replying user has drawn a circle on a man's face in the photograph and attached a text "Who is this?" to ask who the man in the photograph is.

Alternatively, as shown in FIG. 3D, the replying user may attach the reply 57 in the form of a stick-on attachment on the posted user's article 53. For example, the reply 57 may be a photograph. As shown in FIG. 3C, the reply communication terminal 20 may be a mobile communication terminal. As shown in FIG. 3C, the replying user prepares the reply 57 in the form of a stick-on attachment including a photograph and a text through the reply communication terminal 20. As shown in FIG. 3D, the replying user then connects to the web page 32 through the reply communication terminal 20, and attaches the prepared reply 57 to the posted user's article 53.

As shown in FIG. 3E, the user may check the user's article 53 having the replies 55 and 57 through the user page 51 displayed on the user communication terminal 10 connected to the web server 30. The user's article 53 having the replies 55 and 57 of the user page 51 shown in FIG. 3E is the same as the user's article 53 having the replies 55 and 57 posted on the web page 32 shown in FIG. 3D.

According to the present invention, various types of replies may be attached to the user's article posted on the web page. The replies may be at least one of a text, a still image, a moving image and audio data.

The user communication terminal 10 executes the user page 51, and then connects to the web server 30 having the posted user's article 53 to receive information about a reply 56. The user communication terminal 10 displays the user's article 53 and the reply 56 attached to the user's article 53 on the user page 51. Therefore, although the user does not directly connect to the web page of the web server 30, the user can easily check the reply 56 attached to the user's article 53 through the user page 51.

While the invention has been shown and described with reference to a certain preferred embodiments thereof, it will be understood by those skilled in the art that various changes in form and details may be made therein without departing from the spirit and scope of the invention as defined by the appended claims. For example, although an embodiment shows a case in which a replying user connects to the web page having the prepared user's article through the reply communication terminal and then attaches a reply to the user's article, the present invention is not limited in this regard. That is, the replying user may prepare a reply to be attached to the user's article posted on the web page, and then connect to the web page to attach the reply to the user's article.

Further, although an embodiment shows a case in which the user's article is displayed on the user page after receiving information about a reply from the web server, without regard to whether or not a reply exists, the present invention is not limited in this regard. For example, the user's article may be displayed on the user page only after receiving the user's article having a reply from the web server.

## Claims

1. A reply method of a communication system (100), the reply method comprising:
posting a user's article (53) registered on a user page (51) of a user communication terminal (10) on a web page (32) of a web server (30);
connecting to the web page through a reply communication terminal (20) and attaching a reply (56) to the posted user's article; and
displaying the user's article (53) having the reply (56) on the user page (51), when a request for displaying the user's article on the user page is received, wherein displaying the user's article comprises:
requesting information about the reply to the web page (32) when the request for displaying the user's article on the user page (51) is received;
receiving the information about the reply from the web page; and
displaying the user's article having the reply on the user page according to the received information of the reply.

2. The reply method of claim 1, wherein the reply (56) is directly attached to content of the posted user's article (53).

3. The reply method of claim 2, wherein the reply (56) is formed of at least one of a text, a still image, a moving image and audio data.

4. The reply method of claim 2, wherein the reply (56) is formed of at least one of a text and a stick-on attachment.

5. The reply method of claim 1, wherein attaching a reply is performed through a communication terminal (10, 20) accessible to a web.

6. A communication system (100) comprising:
a web server (30) having a web page (32) for posting an article (53);
a user communication terminal (10) having a user's article (53) of a user page (51), the user communication terminal connecting to the web page of the web server and posting the user's article on the web page; and
a reply communication terminal (20) for connecting to the web server and attaching a reply (56) to the posted user's article;
wherein the user communication terminal is adapted to request information about the reply to the webpage receive information about the reply from the web page and display the user's article having the reply on the user page, when the user communication terminal receives a request for displaying the user's article on the user page.

7. The communication system of claim 6, wherein the reply communication terminal (20) directly attaches the reply (56) to content of the posted user's article (53).

8. The communication system of claim 7, wherein the reply (56) is formed of at least one of a text, a still image, a moving image and audio data.

9. The communication system of claim 7, wherein the reply (56) is formed of at least one of a text and a stick-on attachment.

10. The communication system of claim 6, wherein each of the user communication terminal (10) and the reply communication terminal (20) comprises at least one of a mobile communication terminal and a computer.

## Patentansprüche

1. Antwortverfahren eines Kommunikationssystems (100), wobei das Antwortverfahren Folgendes beinhaltet:
Posten eines auf einer Benutzerseite (51) eines Benutzer-Kommunikationsterminals (10) registrierten Benutzerartikels (53) auf einer Webseite (32) eines Webservers (30);
Herstellen einer Verbindung mit der Webseite über ein Antwort-Kommunikationsterminal (20) und Anhängen einer Antwort (56) an den geposteten Benutzerartikel; und
Anzeigen des Benutzerartikels (53) mit der Antwort (56) auf der Benutzerseite (51), wenn eine Anforderung zum Anzeigen des Benutzerartikels auf der Benutzerseite empfangen wird, wobei das Anzeigen des Benutzerartikels Folgendes beinhaltet:
Anfordern von Informationen über die Antwort auf die Webseite (32), wenn die Anforderung zum Anzeigen des Benutzerartikels auf der Benutzerseite (51) empfangen wird;
Empfangen der Informationen über die Antwort von der Webseite; und
Anzeigen des Benutzerartikels mit der Antwort auf der Benutzerseite gemäß den empfangenen Informationen der Antwort.

2. Antwortverfahren nach Anspruch 1, wobei die Antwort (56) direkt an Inhalt des geposteten Benutzerartikels (53) angehängt wird.

3. Antwortverfahren nach Anspruch 2, wobei die Antwort (56) aus Text-, Festbild-, Bewegtbild- und/oder Audiodaten gebildet wird.

4. Antwortverfahren nach Anspruch 2, wobei die Antwort (56) aus einem Text- und/oder einem Aufkleber-Anhang gebildet wird.

5. Antwortverfahren nach Anspruch 1, wobei das Anhängen einer Antwort durch ein Kommunikationsterminal (10, 20) erfolgt, das auf ein Web zugreifen kann.

6. Kommunikationssystem (100), das Folgendes umfasst:
einen Webserver (30) mit einer Webseite (32) zum Posten eines Artikels (53);
ein Benutzer-Kommunikationsterminal (10) mit einem Benutzerartikel (53) einer Benutzerseite (51), wobei das Benutzer-Kommunikationsterminal eine Verbindung mit der Webseite des Webservers herstellt und den Benutzerartikel auf der Webseite postet; und
ein Antwort-Kommunikationsterminal (20) zum Herstellen einer Verbindung mit dem Webserver und zum Anhängen einer Antwort (56) an den geposteten Benutzerartikel;
wobei das Benutzer-Kommunikationsterminal so ausgelegt ist, dass es Informationen über die Antwort auf die Webseite anfordert, Informationen über die Webseite von der Webseite empfängt und den Benutzerartikel mit der Antwort auf der Benutzerseite anzeigt, wenn das Benutzer-Kommunikationsterminal eine Anforderung zum Anzeigen des Benutzerartikels auf der Benutzerseite erhält.

7. Kommunikationssystem nach Anspruch 6, wobei das Antwort-Kommunikationsterminal (20) die Antwort (56) direkt an Inhalt des geposteten Benutzerartikels (53) anhängt.

8. Kommunikationssystem nach Anspruch 7, wobei die Antwort (56) aus Text-, Festbild-, Bewegtbild- und/oder Audiodaten gebildet wird.

9. Kommunikationssystem nach Anspruch 7, wobei die Antwort (56) aus einem Text- und/oder einem Aufkleber-Anhang gebildet wird.

10. Kommunikationssystem nach Anspruch 6, wobei das Benutzer-Kommunikationsterminal (10) und das Antwort-Kommunikationsterminal (20) ein mobiles Kommunikationsterminal und/oder einen Computer umfassen.

## Revendications

1. Procédé de réponse d'un système de communication (100), le procédé de réponse comprenant les opérations consistant à :
poster un article d'utilisateur (53) enregistré sur une page Utilisateur (51) d'un terminal de communication utilisateur (10) sur une page web (32) d'un serveur web (30) ;
assurer la connexion vers la page web par l'intermédiaire d'un terminal de communication de réponse (20) et joindre une réponse (56) à l'article d'utilisateur ayant été posté ; et
afficher l'article d'utilisateur (53) avec la réponse (56) sur la page Utilisateur (51), lorsqu'une demande relative à l'affichage de l'article d'utilisateur sur la page Utilisateur est reçue, cas dans lequel l'article d'utilisateur comprend les opérations consistant à :
demander des informations au sujet de la réponse faite vers la page web (32) lorsque la demande relative à l'affichage de l'article d'utilisateur sur la page Utilisateur (51) est reçue ;
recevoir les informations au sujet de la réponse en provenance de la page web ; et
afficher l'article d'utilisateur avec la réponse sur la page Utilisateur, en fonction des informations reçues de la réponse.

2. Procédé de réponse selon la revendication 1, la réponse (56) étant directement jointe au contenu de l'article d'utilisateur ayant été posté (53).

3. Procédé de réponse selon la revendication 2, la réponse (56) étant constituée d'au moins un des éléments suivants, à savoir un texte, une image fixe, une image mouvante et des données audio.

4. Procédé de réponse selon la revendication 2, la réponse (56) étant constituée d'au moins un des éléments suivants, à savoir un texte et une pièce jointe à coller.

5. Procédé de réponse selon la revendication 1, l'opération consistant à joindre une réponse étant réalisée par l'intermédiaire d'un terminal de communication (10, 20) apte à accéder à un web.

6. Système de communication (100) comprenant :
un serveur web (30) possédant une page web (32) pour poster un article (53) ;
un terminal de communication utilisateur (10) avec un article d'utilisateur (53) d'une page Utilisateur (51), le terminal de communication utilisateur assurant la connexion vers la page web du serveur web et postant l'article d'utilisateur sur la page web ; et
un terminal de communication de réponse (20) pour assurer la connexion au serveur web et joindre une réponse (56) à l'article d'utilisateur ayant été posté ;
cas dans lequel le terminal de communication utilisateur est conçu pour demander des informations au sujet de la réponse faite vers la page web, recevoir des informations au sujet de la réponse en provenance de la page web et afficher l'article d'utilisateur avec la réponse sur la page Utilisateur, lorsque le terminal de communication utilisateur reçoit une demande relative à l'affichage de l'article d'utilisateur sur la page Utilisateur.

7. Système de communication selon la revendication 6, le terminal de communication de réponse (20) joignant directement la réponse (56) au contenu de l'article d'utilisateur ayant été posté (53).

8. Système de communication selon la revendication 7, la réponse (56) étant constituée d'au moins un des éléments suivants, à savoir un texte, une image fixe, une image mouvante et des données audio.

9. Système de communication selon la revendication 7, la réponse (56) étant constituée d'au moins un des éléments suivants, à savoir un texte et une pièce jointe à coller.

10. Système de communication selon la revendication 6, chaque poste à savoir le terminal de communication utilisateur (10) et le terminal de communication de réponse (20) comportant au moins l'un des postes suivants, à savoir un terminal de communication mobile et un ordinateur.
